Europäisches Patentamt

European Patent Office

Office européen des brevets

(11) Publication number: **0 472 084 A2**

# EUROPEAN PATENT APPLICATION

(21) Application number: **91113508.5**

(22) Date of filing: **12.08.91**

(51) Int. Cl.⁵: **G11B 7/12**

(30) Priority: **23.08.90 JP 219946/90**

(43) Date of publication of application:
**26.02.92 Bulletin 92/09**

(84) Designated Contracting States:
**DE FR GB NL**

(71) Applicant: **KABUSHIKI KAISHA TOSHIBA**
**72, Horikawa-cho Saiwai-ku**
**Kawasaki-shi Kanagawa-ken 210(JP)**

(72) Inventor: **Takahashi, Naomasa, Intellectual**
**Property Division**
**KABUSHIKI KAISHA TOSHIBA, 1-1 Shibaura**
**1-chome**
**Minato-ku, Tokyo 105(JP)**

(74) Representative: **Blumbach Weser Bergen**
**Kramer Zwirner Hoffmann Patentanwälte**
**Radeckestrasse 43**
**W-8000 München 60(DE)**

(54) **Optical head apparatus.**

(57) An optical head apparatus (2) of this invention has an object lens (14), arranged to oppose an optical disk (50) and to be perpendicular to a plane including a normal to a central beam of laser beam and movable in a desired direction, and a mirror (8), arranged at an angle of 45° with respect to the central beam of the laser beam, for guiding the laser beam toward the object lens. The mirror (8) and the lens (14) are integrally supported and are biased so that the gap between the lens and the optical disk (50) is constant. When the optical disk (50) is rotated while it vibrates or is inclined, error rates during data recording and data reproduction are increased. According to this invention, the support (30) member for supporting the mirror (8) and the lens (14) is rotated within a plane perpendicular to the central beam in accordance with the vibration or inclination of the optical disk (50). As a result, even when the object disk is inclined in accordance with the inclination of the optical disk, coma-distortion is decreased.

F I G. 1

The present invention relates to an apparatus for writing and reading data, e.g., an optical filing system used as an external memory unit of a computer and the like and, more particularly, an optical head apparatus for applying a light beam to a recording medium and detecting a light beam reflected by the recording medium.

Generally, in an optical filing system, i.e., an optical disk apparatus, laser beam is applied to a recording medium, i.e., an optical disk, thereby writing data to be recorded on the optical disk or reading recorded data therefrom, i.e., binary data as data to be written or read, is written on or read.

The optical head apparatus used by the optical disk apparatus includes a light source, i.e., a semiconductor laser, a chassis having a mirror or prism for transmitting the laser beam generated by the semiconductor laser to the recording medium, and a pickup unit arranged on the chassis.

The pickup unit has an object lens, a lens housing, a lens-actuating mechanism, and so on. The object lens supplies the laser beam toward the optical disk or guides the laser beam reflected by the optical disk to a photodetector. The lens housing movably supports the object lens. The lens-actuating mechanism slightly moves the lens housing, i.e., the object lens in a direction perpendicular to the recording surface of the optical lens, i.e., the focus control direction (to be referred to as focusing hereinafter), and in a direction parallel to the recording surface of the optical disk and perpendicular to the tracks formed in the recording surface, i.e., the track control direction (to be referred to as tracking hereinafter).

The chassis is connected to a chassis driver for moving the pickup unit in the tracking direction, a drive arm for transmitting the moving force generated by the driver to the chassis, and so on.

In the optical disk system incorporating the optical head apparatus described above, the optical disk is rotated such that the track included in it is driven at a constant linear speed. When data is to be written on the optical disk, the laser beam generated by the semiconductor laser is intensity-modulated in accordance with the data to be recorded. The laser beam is then reflected by the mirror or prism (which is integrally formed with the chassis) and guided to the object lens. The laser beam is focused on the recording surface of the optical disk through the object lens. The recording surface of the optical disk is heated by the focused laser beam, and data marks, i.e., pits having different reflectances are formed, thereby writing data.

When data is to be reproduced from the optical disk, a laser beam having a predetermined intensity radiates the recording surface of the optical disk through the object lens. The laser beam radiating the optical disk is reflected by the optical disk, is intensity-modulated in accordance with data recorded on the optical disk, i.e., a change in reflectance of the recording surface of the optical disk, and is returned to the pickup unit. The reflected laser beam is converted into an electrical signal by the photodetector and reproduced as data recorded on the optical disk by a signal-processing section.

More specifically, to write data on the optical disk, or to read data therefrom, the optical head apparatus, i.e., the pickup unit is caused to access tracks formed in the recording surface of the optical disk. In this case, first, the chassis is moved so that the pickup unit roughly accesses tracks. Second, the object lens performs tracking and focusing, thereby tracking a desired track and focusing on the recording surface of the optical disk. To write data on the optical disk, the data, i.e., pits are formed in a track. To read data from the optical disk, reflected laser beams having reflectances conforming with an arrangement of the pits are obtained, thereby reading data recorded on the optical disk.

In this manner, tracking and focusing are performed between the lens housing (object lens) and the optical disk. Despite that, when, e.g., the optical disk is rotated in an inclined state, the angle defined by the optical axis of the object lens and the recording surface of the optical disk cannot sometimes be kept at a right angle. For this reason, a method of detecting the inclination of the optical disk and inclining the object lens in accordance with the detected inclination has conventionally been proposed.

However, when the object lens is inclined in accordance with the inclination of the optical disk, as an angle is defined by the laser beam generated by the laser and guided to the optical disk through the mirror or the prism and the optical axis of the lens, coma-distortion may be increased.

When the coma-distortion is increased, the beam spot diameter of the laser beam focused on the optical disk by the object lens is increased. Then, error rates in recording and reproduction of data, i.e., pits may be increased. These problems become decisive obstacles against an increase in recording density.

It is an object of the present invention to provide an optical head apparatus in an optical disk apparatus, in which the angle defined by the recording surface of an optical disk and the light beam directed to the optical disk is constantly kept at a right angle, thereby decreasing error rates in recording and reproduction of data, i.e., pits.

It is another object of the present invention to provide an optical head apparatus including a mechanism in which the angle defined by the recording surface of an optical disk and the light beam directed to the optical disk is kept at a right angle, thereby decreasing coma-distortion that can be increased by the light beam passing through an object lens.

According to the present invention, there is provided an apparatus for radiating light beam on a recording medium and reproducing information recorded on the recording medium on the basis of the light beam reflected by the recording medium comprising, means for generating the light beam, means for guiding the generated light beam towards the recording medium, means for focusing the guided light beam on the recording medium, means for holding guiding means and focusing means as one body, and means for inclinablly supporting the holding means such that the center light axis of the focused light beam in a direction intersects at right angles withe the recording medium.

According to the present invention, there is also provided an optical head apparatus for recording/reproducing data by emitting light beam onto a recording medium, comprising: means, arranged substantially parallel to a recording medium, for generating light beam utilized for recording/reproducing data; means, arranged at an angle of 45$^\circ$ with respect to a plane including a normal to a central beam of the light beam from the generating means, for reflecting the light beam through substantially 90$^\circ$; means for converging the light beam reflected by the reflecting means; means for supporting the reflecting means and the converging means such that an optical axis of the converging means is perpendicular to the plane including the normal to the central beam of the light beam; and means for rotating the supporting means in a plane perpendicular to the central beam of the light beam.

This invention can be more fully understood from the following detailed description when taken in conjunction with the accompanying drawings, in which:

Fig. 1 is a schematic view of an optical head apparatus utilized in an optical filing system and incorporating an embodiment of the present invention;

Fig. 2 is a sectional view of the optical head apparatus shown in Fig. 1;

Fig. 3 is a partially enlarged view showing peripheral portions of an object lens and a mirror for reflecting a laser beam, of the optical head apparatus shown in Fig. 1;

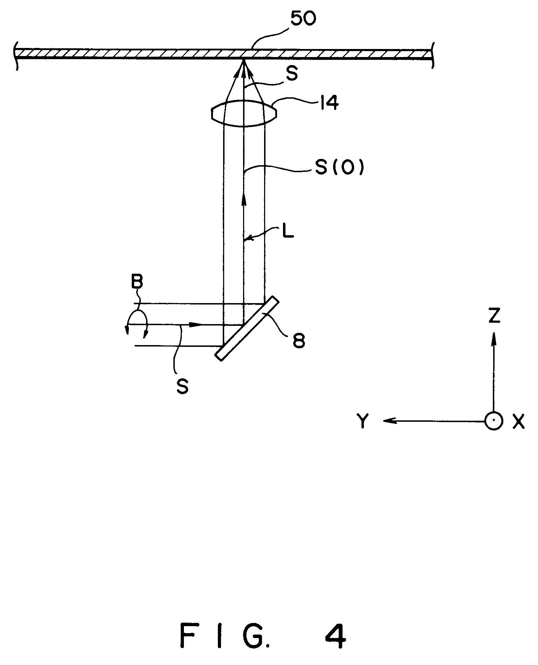

Fig. 4 is a side view of the object lens and the mirror for reflecting the laser beam, which are shown in Fig. 3, seen from a direction parallel to the optical disk; and

Fig. 5 is a schematic perspective view for explaining why coma-distortion can be removed by the object lens and the mirror shown in Figs. 3 and 4.

An optical disk apparatus utilizing the preferred embodiment of the present invention will be described in detail with reference to the accompanying drawings.

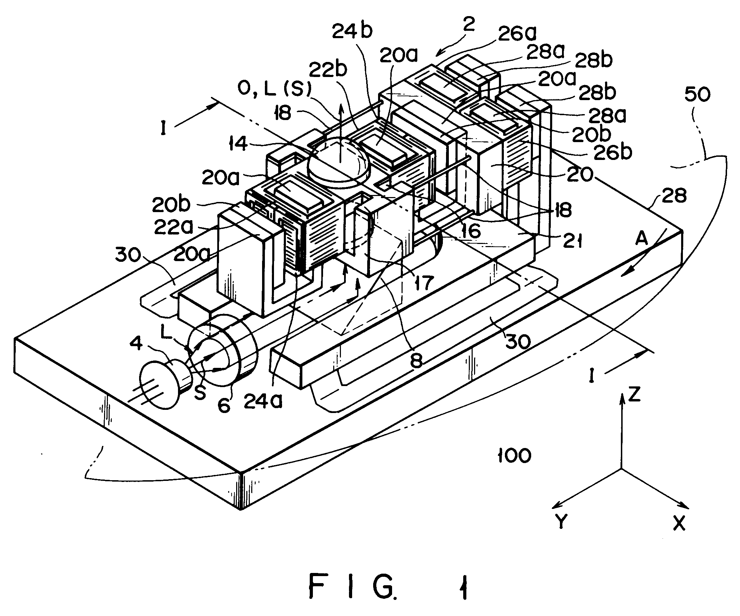

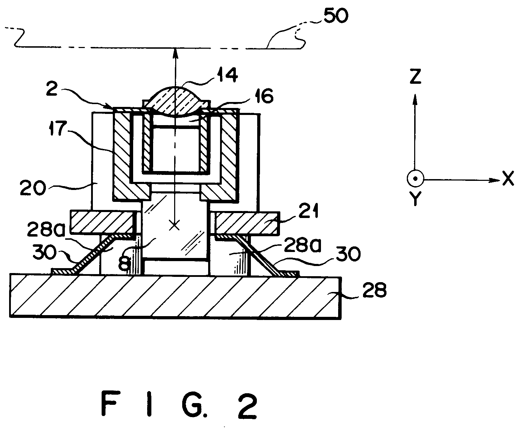

Referring to Figs. 1, 2 and 3, an optical head has a light source, i.e., a semiconductor laser 4, a collimating lens 6, a reflecting mirror 8, and an object lens 14. The semiconductor laser 4 generates laser beam L. The collimating lens 6 collimates the laser beam L generated by the laser 4 into parallel beam. The reflecting mirror 8 reflects the parallel beam to be directed to a recording medium (described later), i.e., an optical disk 50. The object lens 14 focuses the laser beam L reflected by the reflecting mirror 8 on the optical disk 50 and converts the laser beam L reflected by the optical disk 50 into parallel beam.

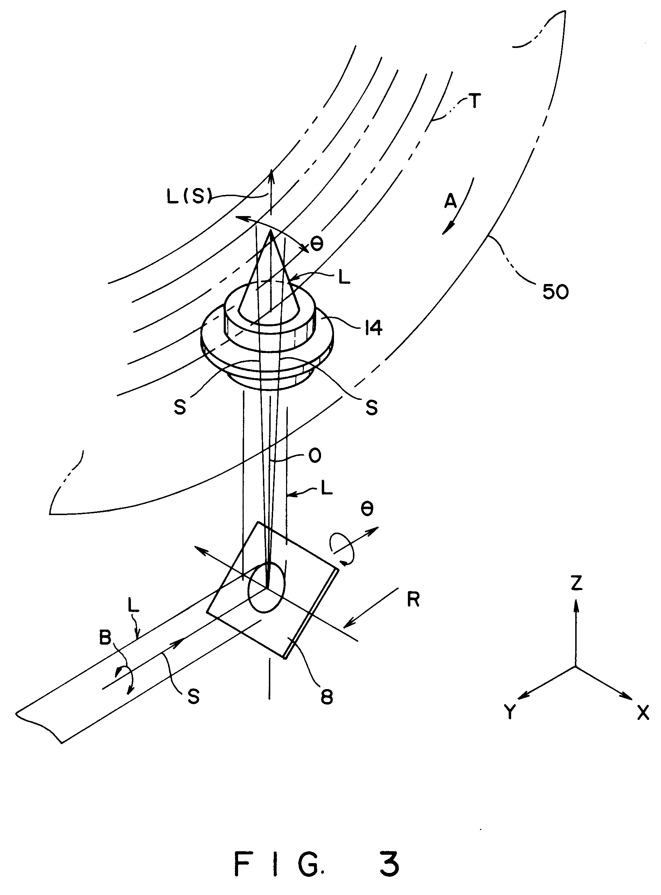

The object lens 14 is held by a lens housing 16. The lens housing 16 is attached to a lens mount member 17. A C-shaped bottom portion of the lens mount member 17 has a hole (not shown) through which light passes to reach the objective lens 14. The mirror 8 for passing light through the hole is attached to the C-shpaed bottom portion. The reflecting mirror 8 is fixed at the portion of the lens mount member 17 between the laser 4 and the object lens 14 at precisely an angle of 45$^\circ$ with respect to the central beam S of the laser beam L generated by the laser 4. In more detail, as is apparent from Fig. 3, an optical axis O of the object lens 14 is located within a plane including the central beam S of the laser beam L and parallel to a normal R to the mirror 8. Hence, the object lens 14 and the reflecting mirror 8 are inclined same angles, alltimes.

The lens housing 16 can move in the focusing direction, i.e., in the Z-axis direction of the optical disk 50, and in its tracking direction, i.e., in the X-axis direction of the optical disk 50. Also in the focusing direction and tracking direction, the lens mount 17, lens 14, lens housing 16 and the mirror 8 are moved together. When the leaf springs 30 are distorted, the lens 14 and lens housing 16 are inclined to the mount 17 (in a direction perpendicular to the radial direction, i.e., the tangential direction of the track.)

A pair of focusing coils 22a and 22b and a pair of tracking coils 24a and 24b are arranged around the lens housing 16. The focusing coils 22a and 22b move the object lens 14 (lens housing 16) in the Z-axis direction. The tracking coils 24a and 24b move the object lens 14, i.e., the lens housing 6 in the X-axis direction. Each of the focusing coils 22a and 22b has a hole at its center to receive a yoke 20a as part of the lens supporter 20 (described later), and is in tight contact with a side surface of the lens housing 16. The tracking coils 24a and 24b are plane coils and arranged close to the outer sides of the coils focusing 22a and 22b, respectively.

The lens supporter 20 arranged on a base member 21 for movably supporting the lens housing 16 is arranged around the lens housing 16. The lens supporter 20 has magnets 20b and the yokes 20a. As described previously, the magnets 20b apply a desired magnetic field to the coils 22a, 22b, 24a and 24b arranged around the lens housing 16. Each yoke 20a holds the corresponding magnet 20b and serves as part of the corresponding lens supporter 20 for forming a magnetic circuit together with the corresponding magnet 20b, the coil 22a or 22b, and the coil 24a or 24b.

Tilting coils 26a and 26b which incline themselves in accordance with the inclination of the optical disk 50 are arranged at one end of the lens supporter 20. Each of the tilting coils 26a and 26b has a hole at its center for receiving the corresponding yoke 28a as part of a chassis 28 (described later).

The respective components, e.g., the reflecting mirror 8, the object lens 14, the lens housing 16, the lens mount member 17, the wire springs 18, the lens supporter 20, and the base 21 (all of which constitute the pickup unit 2) are mounted on the chassis 28 through leaf springs 30. The leaf springs 30 includes atleast one ginbal-spring. The leaf springs 30 inclines the base 21 at a desired angle. Hence, even when the optical disk 50 is inclined, the angle defined by the optical axis O of the object lens 14 and the recording surface of the optical disk 50 is precisely kept at 90°, and the disk 50 and the base 21 are kept parallel to each other through a gap. Magnets 28b and yokes 28a are mounted at one end of the chassis 28. The magnets 28b apply a desired magnetic field to the tilting coils 26a and 26b which are in tight contact with the corresponding supporter 20. The yokes 28a hold the magnets 28b and form a magnetic circuit constituted by the magnets 28b and the tilting coils 26a and 26b. On the other hand, the laser beam source 4 and collimator lens 6 are fixed to the chassis 28, and the collimated beam reaches the mirror 8, for example, through the notch.

The chassis 28 is moved by a chassis driver and a drive arm (not shown) in the radial direction of the optical disk 50, e.g., over the entire track of the optical disk 50. Accordingly, the pickup unit 2, i.e., the object lens 14 can be moved over all tracks in the radial direction (X-axis). Thus, if the lens supporter 20 and yoke 20a are inclined along with the base 21, the inclination is transmitted to the mount 17 via wire 18. In other words, the mount 17, lens 14, lens housing 16 and mirror 8 are inclined together.

The operation of the optical disk system which incorporates the pickup unit 2 will be described.

In the optical disk system, the optical disk is rotated in the direction of an arrow A so that the track included in the optical disk 50 is driven at a constant linear speed.

When data is to be recorded on the optical disk 50, recording laser beam generated by the semiconductor laser 4 is intensity-modulated by a beam intensity modulator (not shown) in accordance with the data to be recorded. The intensity-modulated laser beam L is reflected by the reflecting mirror 8 and directed toward the object lens 14 and focused on the optical disk 50. The recording surface of the optical disk 50 is heated by the laser beam L focused on it so that pits having different reflectances are formed. Namely, the data to be recorded is recorded on the optical disk 50.

When data is to be read from the optical disk 50, reading laser beam L having a predetermined intensity is generated by the semiconductor laser 4. The laser beam L is reflected by the reflecting mirror 8 to be directed toward the object lens 14 and radiates the recording surface of the optical disk 50 through the object lens 14. The laser beam L radiating the optical disk 50 is reflected by the optical disk 50. Then, the laser beam is modulated to represent different reflectances in accordance with the data recorded on the optical disk 50, i.e., in accordance with the pits, and is returned to the object lens 14. The laser beam L reflected by the optical disk 50 is converted into an electrical signal by a photodetector (not shown), reproduced by a signal reproduction circuit (not shown) as data recorded on the optical disk 50, and is output to a display system (not shown).

When data is to be recorded on/reproduced from the optical disk 50, as described above, the focal point of the laser beam L to radiate the recording surface of the optical disk 50 must accurately coincide with the recording surface of the optical disk 50. At the same time, the optical disk 50 must be rotated at a constant linear velocity so that the center of the tracks T formed from the center to the circumference of the optical disk 50 in a concentrical or spiral manner must always coincide with the portion on which the laser beam L is focused. More specifically, the focusing coils 22a and 22b and the tracking coils 24a and 24b described previously are utilized so that the distance between the portion on the optical disk, on which the laser beam L converged by the object lens 14 is focused, and the recording surface of the optical disk 50 is aligned. Simultaneously, the portion on which the laser beam L is focused and the center of each track T of the recording surface of the optical disk 50 are caused to coincide.

More specifically, a desired current is supplied to the focusing coils 22a and 22b and the tracking coils 24a and 24b, and thus the lens housing 16 is moved in a desired direction. Then, the gap between the optical disk 50 and the optical lens 14, and the inclination of the optical disk 50 are kept to be set in an optimum positional relationship. This is called that data recorded on the track T of the optical disk 50, i.e., the pits, and the laser beam L are in the just-on-focus and just-on-track state.

On the other hand, assume that the optical disk 50 is largely inclined, and the gap between the object lens 14 and the optical disk 50 and the inclination cannot be set in the optimum positional relationship even by means of focusing and tracking. In other words, assume that the data recorded on the track T, i.e., the pits of the optical disk 50, and the laser beam L are in the focusing- or tracking-error state.

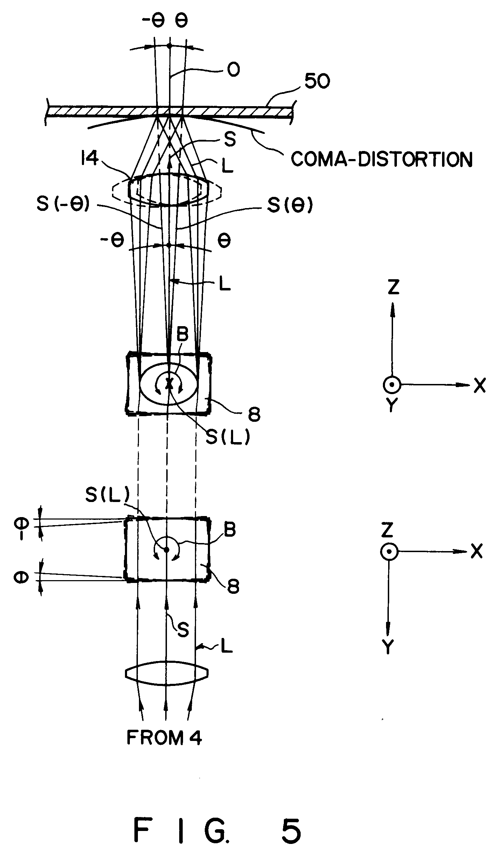

In this case, the tilting coils 26a and 26b arranged to the lens supporter 20 are biased by a control circuit (not shown). The lens supporter 20 mounted on the base 21 through the springs 30 is inclined or rotated in a desired direction by the electromagnetic operation of the current supplied to the tilting coils 26a and 26b and the magnets 28b arranged on the chassis 28. More specifically, as shown in Fig. 5, when the angle defined by the optical axis O of the object lens 14 and the optical disk 50 is inclined from $90°$ by $\theta$ or $-\theta$, the mirror 8 is inclined or rotated in the direction of an arrow B with respect to the central beam S of the laser beam L by $\theta$ or $-\theta$.

In this state, a desired current is supplied to the focusing coils 22a and 22b and the tracking coils 24a and 24b of the lens housing 16, and the lens housing 16 is moved in a desired direction. As a result, the gap between the object lens 14 and the optical disk 50 and the inclination of them are maintained in an optimum positional relationship.

In the present invention, there is disclosed a mechanism capable of eliminating the focusing error and the tracking error due to an inclination (gap) occurring between the optical disk 50 and object lens 14. Since the mechanism for detecting the inclination (tilt) is well known, it is not described in detail. For example, such a detecting mechanism is disclosed in Published Unexamined Japanese Patent Application No. 61-284840.

As has been described above, the mirror 8 for reflecting the laser beam L generated by the laser 4 to be directed to the object lens 14 and the optical disk 50 is integrally assembled together with the lens supporter 20 for movably supporting the object lens 14 (lens housing 16). Since, the object lens 14 and the mirror 8 are inclined or rotated same angle always, even if the optical disk 50 is largely inclined and focusing and tracking to the object lens 14 become insufficient, the optical axis O of the object lens 14 and the central beam S of the laser beam L generated by the laser 4 can be caused to precisely coincide to each other by inclining or rotating the base 21. Then, coma-distortion that often occurs in the laser beam passing through the object lens is removed.

As a result, an error rate during data writing on or data reading from the optical disk 50, that can be caused by a shift of a beam spot of the laser beam L due to an inclination or vibration of the optical disk 50, can be decreased. This is advantageous at a higher recording density of the optical disk 50 as well.

## Claims

1. An optical filing system (100) characterized by comprising:

   means (8), arranged at a desired angle with respect to a light beam, for reflecting the light beam;

   means (14) for focusing the reflected light beam on a recording medium (50);

   means for supporting (30) said reflecting means at a desired angle with respect to an optical axis included in said focusing means; and

   means for moving (26a and 26b) said supporting means in a desired direction.

2. An apparatus according to claim 1, characterized in that said reflecting means (8) is fixed at an angle of $45°$ with respect to a central beam of the light beam.

3. An apparatus according to claim 1, characterized in that said supporting means (30) supports said focusing means and said reflecting means such that a plane including a normal to a central beam of the light beam incident on said reflecting means and the optical axis of said focusing means are present on a single plane.

4. An apparatus according to claim 3, characterized in that said supporting means (30) moves said reflecting means by the same amount as that of the change when an angle defined by the optical axis of said focusing means and the recording medium is changed.

5. An apparatus according to claim 4, characterized in that said moving means (26a and 26b) moves said supporting means to surround the central beam of the light beam.

6. An apparatus according to claim 1, characterized in that said focusing means includes an element capable of converging the light beam.

7. An optical head apparatus (2) for recording/reproducing data by emitting a light beam onto a recording medium characterized by comprising:

means (4) arranged substantially parallel to a recording medium (50), for generating light beam utilized for recording/reproducing data;

means (8), arranged at an angle of 45° with respect to a plane including a normal to a central beam of the light beam generated by said generating means, for reflecting the light beam through substantially 90°;

means (14) for converging the light beam reflected by said reflecting means;

means (30) for supporting said reflecting means and said converging means such that an optical axis of said converging means is perpendicular to the plane including the normal to the central beam of the light beam; and

means (26a and 26b) for rotating said supporting means in a plane perpendicular to the central beam of the light beam.

8. An apparatus (100) for radiating light beam on a recording medium and reproducing information recorded on the recording medium on the basis of the light beam reflected by the recording medium comprising; means (4) for generating the light beam; means (8) for guiding the generated light beam towards the recording medium; and means (14) for focusing the guided light beam on the recording medium characterized by further comprising;

means (21) for holding guiding means and focusing means as one body; and

means (28 and 30) for supporting the holding means such that the center light axis of the focused light beam can be inclined in a direction intersecting at right angles withe the recording medium.

F I G. 1

EP 0 472 084 A2

F I G. 2

F I G.  3

FIG. 4

F I G. 5